# EUROPEAN PATENT SPECIFICATION

(11) **EP 1 238 597 B1**
(45) Date of publication and mention of the grant of the patent: **27.04.2005**
(21) Application number: 02075836.3
(22) Date of filing: 04.03.2002
(51) Int. Cl.: A43C 11/14, B29D 31/518

(54) **A toothed strap for fastening devices, particularly for sports footwear**
Zahnleiste für Verschlussvorrichtung, insbesondere für Sportsschuhwerk
Crémaillère d'une fixation, en particulier de chaussures de sport

(30) Priority: 07.03.2001 IT PD010053
(43) Date of publication of application: 11.09.2002
(73) Proprietor: Novation S.p.A., 31044 Montebelluna (Treviso) (IT)
(72) Inventor: Gallina, Simone, Bauer Italia S.p.A., 31044 Montebelluna (IT)
(74) Representative: Cantaluppi, Stefano

(56) References cited:
- EP-A- 0 880 912
- US-A- 4 395 801
- US-A1- 2001 013 157

## Description

The present invention relates to a toothed strap for fastening devices, particularly for sports footwear, according to the preamble to main Claim 1.

The toothed strap concerned is suitable for use as a fastening device for articles of any type, in particular, sports articles, or for watch straps or the like.

Toothed straps of the type indicated are used widely in the field of fastening devices for sports footwear and, in particular, in the field of skating boots, ski-boots and snow-board boots. They are usually in the form of a toothed strap which is produced by moulding of a fairly flexible plastics material and is intended to be engaged by a stop and/or feed ratchet mechanism of a lever fastening device.

The main object of the invention is to improve the functional capability of the elements which make up the toothed strap whilst at the same time seeking to achieve a pleasing overall appearance, this aspect being of considerable importance in this field.

In particular, one of the objects is to provide a toothed strap which helps the user to recognize the position of the stop ratchet mechanism relative to the strap during the fastening of the fastening device so that the fastening device can subsequently be fastened more quickly and easily with the same degree of tensioning as was originally selected.

Another object is to improve resistance to the stresses which arise in use, particularly resistance to tension due to the tensioning forces produced in the toothed strap, limiting axial deformation under load for a given cross-section and for a given overall lightness of the strap.

Yet another object is to improve the shock-absorbing effect of the teeth of the strap on the retaining tooth of the stop ratchet mechanism during rapid movement of the strap during fastening when the retaining tooth jumps over successive teeth on the strap.

These and other objects are achieved by the invention by means of a toothed strap for fastening devices which is formed in accordance with the following claims.

Further characteristics and advantages of the invention will become clearer from the following detailed description of a preferred embodiment thereof, given by way of non-limiting example, with reference to the appended drawings, in which:

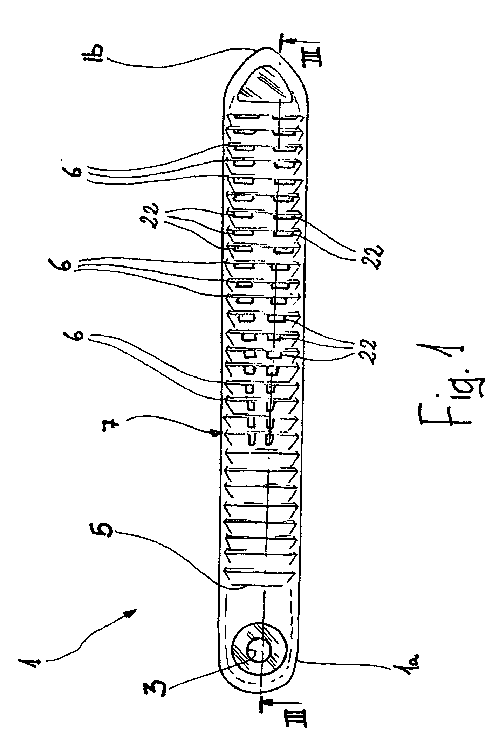

Figure 1 is a plan view showing a toothed strap according to the invention, from above,
Figure 2 is a plan showing the strap of Figure 1 from below.

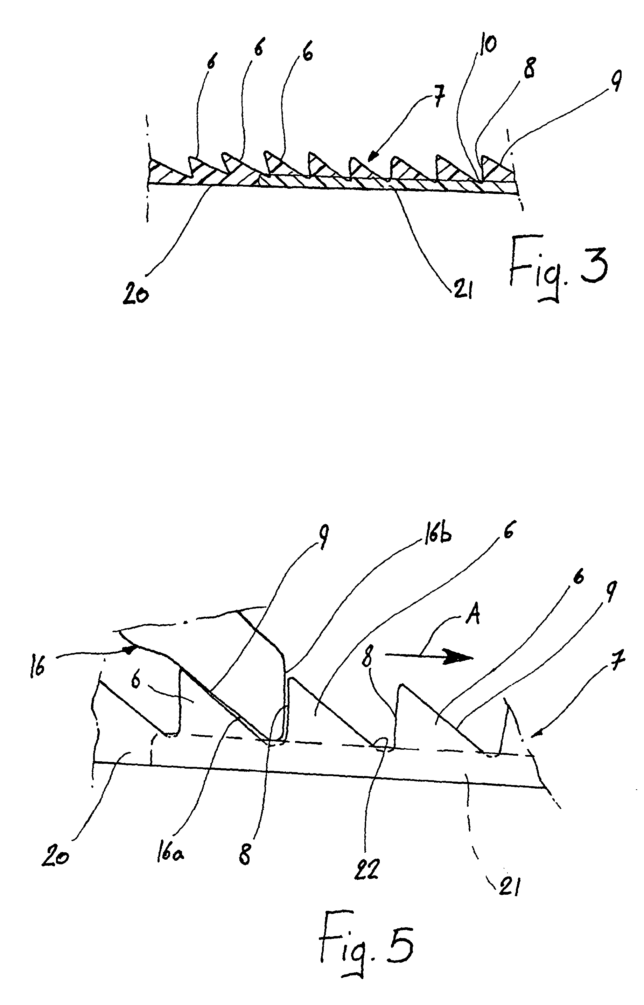

Figure 3 is a partially-sectioned view, taken on the line III-III of Figure 1, on an enlarged scale,

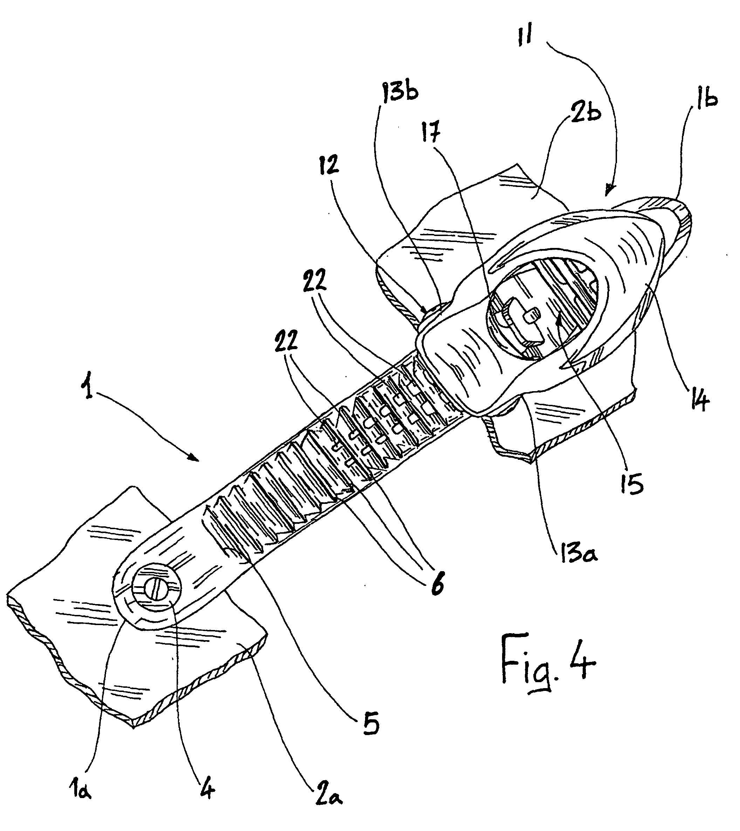

Figure 4 is a view corresponding to Figure 1, showing a fastening device used on the toothed strap, and
Figure 5 is a partial side elevational view showing the strap of Figure 4, on an enlarged scale.

The toothed strap of the invention will be described below with reference to a preferential use as a fastening device for footwear, but it is intended that the same strap may similarly also be used for many other applications without thereby departing from the scope of protection of the present patent rights. In particular, the above-mentioned strap is suitable for use for joining portions of fastening devices for helmets, snowboards, snowshoes, skates, skis, etc.

With reference to the drawings mentioned, a toothed strap, generally indicated 1, is in the form of a flexible strap extending along a major longitudinal axis and having a first end 1a arranged for fixing to one of the edge portions 2a, 2b of an item of footwear (not shown) which are to be fastened against one another, and a second, opposite free end 1b. The end 1a has a through-hole 3 for the fixing of the strap to the edge portion 2a, for example, by means of a rivet 4, or other similar fixing means.

A surface 5 of the strap 1 has a plurality of teeth 6 arranged transverse the longitudinal axis of the strap and together defining a rack 7. Each tooth has a "sawtooth" profile, that is, with a face 8 almost perpendicular to the plane of the strap and with an inclined ramp-like side 9. Each side 9 is connected to the face 8 of an adjacent tooth by a base 10.

A fastening device, generally indicated 11, which has a conventional structure and is not a subject of the present invention, is fixed to the edge portion 2b of the footwear upper. The device 11 comprises a base 12 arranged for connection to the edge portion 2b and carrying a pair of flanges 13a, 13b between which is mounted pivotably a ratchet mechanism with a lever 14 for advancing the strap, that is, a mechanism which can engage the rack 7 as a result of a pivoting movement of the lever 14.

The device 11 also comprises a stop ratchet mechanism 15 which is also mounted pivotably on the base 12 and includes a pawl 16 extended by an operating appendage 17. The pawl 16 is a stopping or retaining pawl for the rack 7, that is, it is caused to slide with its front 16a against the side 9 of a rack tooth until it passes over the tooth in order to engage the face of the same tooth with its rear 16b so as to restrain the rack 7, preventing sliding in the direction opposite to the direction of the arrow A in Figure 5, as will be explained further in the following description.

According to a principal feature of the invention, the strap 1 comprises a first portion and a second portion, which are indicated 20 and 21, respectively, and both of which are preferably made of plastics material by the injection-moulding of one onto the other.

As a result of the over-moulding, the second portion 21 is at least partially incorporated in the first portion 20 so as to be partially visible through the toothed surface 5. In greater detail, the first portion 20 of the strap has, in the region of the base 10 of each tooth 6, a pair of transversely spaced-apart and aligned openings 22, through which the second strap portion projects.

The first and second portions 20, 21 are also made of materials of different colours so as to create a two-tone effect between the second strap portion 21 which is visible through the openings 22 and the remaining toothed surface 5 of the first portion 20.

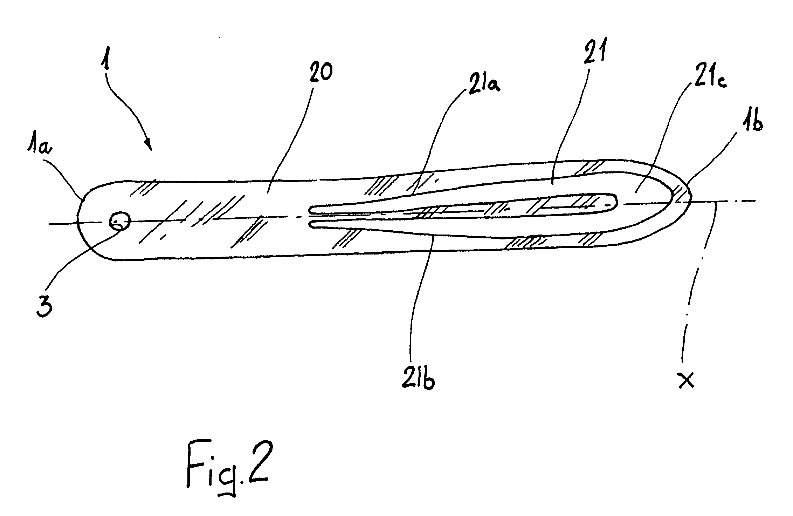

As shown in Figure 2, the second strap portion 21 has an elongate, U-shaped configuration in plan with two arms 21a and 21b, respectively, connected by a transverse portion 21c.

The arms 21a, 21b are elongate in the direction of the longitudinal axis of the strap, with transverse dimensions which increase towards the connecting portion 21c (Figure 2). The arms 21a, 21b preferably have a reflectively symmetrical configuration with respect to a longitudinal median plane perpendicular to the plane of the strap, defined by the axis X of Figure 2. Each tooth 6 extending in the region of the second portion 21 is thus associated with a pair of respective openings 22 of different transverse dimensions, which are shown up in the toothed surface 5 by the preselected colour of the second strap portion 21. Each pair of openings 22 constitutes means for indicating the position of the stop pawl 16, which in turn is correlated with the respective degree of tensioning produced by the fastening device.

This advantageously provides the user with a reference for the tension exerted during fastening, on the basis of the width of the coloured strip shown, and also enables the same degree of tensioning, for example, equal to that originally preselected, to be achieved quickly during subsequent closure of the fastening. This reference is also advantageously indelible as well as clearly and easily read by the user.

According to a further feature of the invention, the second strap portion 21 is made of a material with resilience characteristics such as to be softer than the material of which the first portion 20 is made. In the region of the base of each tooth 6, the surfaces of the second strap portion 21 project to a limited extent beyond the profile of the toothed surface 5 (Figure 5) in a manner such that the end of the pawl 16 comes into contact with these surfaces during its "jumping" movement from tooth to tooth (the strap 1 is moved in the direction of the arrow A), thus ensuring a shock-absorbing effect on the pawl, which facilitates the movement of the strap by the user, reducing the vibratory phenomena that are produced by this movement.

In a variant of the invention, the second strap portion 21 is made of a plastics material which has greater stiffness and tensile strength characteristics, at least in its lower portion, that is, in a position remote from the toothed surface 5. For example, a carbon-fibre, Kevlar, nylon, or fabric insert may be inserted in the plastics material used, with an orientation such as to increase tensile strength in the longitudinal direction, for a given cross-section and weight of the strap. In addition, a fabric insert may be inserted in the portion 21 so as to increase the inextensibility characteristics of the strap.

As a result, the strap advantageously has a greater overall ability to withstand the tensile force produced by the fastening load, at the same time achieving reduced longitudinal deformation between the teeth. The reduction in this deformation enables the pitch of the set of teeth (the longitudinal distance between adjacent teeth of the strap) to be kept almost constant, improving the precision of engagement between the ratchet mechanisms of the fastening device and the teeth of the strap, as well as reducing the overall wear of the surfaces that are in contact.

The second portion 21 may also be decorated further so as to accentuate the overall aesthetic result achieved by the above-described two-tone effect.

The invention thus achieves the objects proposed, affording the above-mentioned advantages over known solutions.

## Claims

1. A toothed strap for fastening devices, in particular for sports footwear, including a toothed surface having a plurality of teeth arranged along a major longitudinal axis, the strap being **characterized in that** it comprises a first portion (20) and a second portion (21) which are moulded over one another, the second portion being partially incorporated in the first portion and being made of a material having a colour different from the colour with which the first portion is made so as to be at least partially visible through the toothed surface.

2. A toothed strap according to Claim 1, in which the first and second portions are moulded over one another by the injection of respective plastics materials.

3. A toothed strap according to Claim 1 or Claim 2, in which a base region is defined between each pair of adjacent teeth of the toothed surface, the first portion comprising, in a plurality of the said base regions, at least a respective plurality of openings through which the second portion extends.

4. A toothed strap according to Claim 3 in which parts of the second portion of the strap project beyond the profile of the toothed surface through respective openings.

5. A toothed strap according to Claim 3 or Claim 4 in which the openings have transverse dimensions which increase towards one of the longitudinal ends of the strap.

6. A toothed strap according to one or more of the preceding claims in which the second portion is U-shaped in plan with a pair of respective arms which are elongate in a direction substantially parallel to the longitudinal axis and are connected to one another transversely at one end.

7. A toothed strap according to Claim 6 in which the arms have a reflectively symmetrical configuration with respect to a median plane of the strap perpendicular to the toothed surface.

8. A toothed strap according to Claim 6 or Claim 7 in which a first plurality and a second plurality of the said openings are provided, each plurality being aligned over a respective arm of the second portion so that the openings constitute means for indicating the position of a stop ratchet mechanism of a fastening device, relative to the toothed strap.

9. A toothed strap according to one or more of Claims 2 to 8, in which the plastics material of which the second portion is made has greater resilient pliability characteristics than the plastics material of which the first portion is made.

10. A toothed strap according to one or more of Claims 2 to 8 in which the second portion is made of a plastics material having greater tensile strength characteristics than the plastics material of the first portion.

11. A toothed strap according to Claim 10 in which the plastics material of the second portion is reinforced with carbon fibres, with Kevlar, with nylon, or with fabric, oriented predominantly along the longitudinal axis.

12. A toothed strap according to one or more of Claims 2 to 8, comprising a fabric insert in the second portion.

## Patentansprüche

1. Zahnleiste für Verschlussvorrichtung, insbesondere für Sportschuhwerk, mit einer gezahnten Oberfläche, die eine Vielzahl von Zähnen besitzt, welche entlang einer Längsachse angeordnet sind, wobei die Leiste **dadurch gekennzeichnet ist, dass** sie einen ersten Abschnitt (20) und einen zweiten Abschnitt (21) besitzt, die übereinander geformt sind, wobei der zweite Abschnitt teilweise in den ersten Abschnitt integriert und aus einem Material hergestellt ist, das eine andere Farbe besitzt als die Farbe, aus der der erste Abschnitt hergestellt ist, so dass er zumindest teilweise durch die gezahnte Fläche sichtbar ist.

2. Zahnleiste nach Anspruch 1, wobei der erste und zweite Abschnitt durch Kunststoffeinspritzen übereinander geformt sind.

3. Zahnleiste nach Anspruch 1 oder 2, wobei zwischen jedem Paar aneinander angrenzender Zähne der gezahnten Oberfläche ein Grundbereich gebildet wird, wobei der erste Abschnitt in einer Vielzahl der genannten Grundbereiche mindestens eine entsprechende Vielzahl von Öffnungen besitzt, durch welche sich der zweite Abschnitt erstreckt.

4. Zahnleiste nach Anspruch 3, wobei Teile des zweiten Abschnittes der Zahnleiste über das Profil der gezahnten Oberfläche hinaus durch jeweilige Öffnungen hindurch verlaufen.

5. Zahnleiste nach Anspruch 3 oder 4, wobei die Öffnungen querverlaufende Abmessungen besitzen, die in Richtung der Längsenden der Leiste zunehmen.

6. Zahnleiste nach einem oder mehreren der vorhergehenden Ansprüche, wobei der zweite Abschnitt U-förmig ist, und ein Paar Stränge besitzt, die in einer Richtung, die im wesentlichen parallel zur Längsachse verläuft, verlängert und an einem Ende quer miteinander verbunden sind.

7. Zahnleiste nach Anspruch 6, wobei die Stränge in Bezug auf eine mittlere Ebene der Leiste senkrecht zu der gezahnten Oberfläche eine reflektierende, symmetrische Konfiguration besitzen.

8. Zahnleiste nach Anspruch 6 oder 7, wobei eine erste Vielzahl und eine zweite Vielzahl der genannten Öffnungen vorhanden ist, und jede Vielzahl über einem jeweiligen Strang des zweiten Abschnittes ausgerichtet ist, so dass die Öffnungen Elemente zur Anzeige der Position eines Ratschenmechanismus einer Verschlussvorrichtung in Bezug auf die Zahnleiste darstellen.

9. Zahnleiste nach einem oder mehreren der Ansprüche 2 bis 8, wobei der Kunststoff, aus dem der zweite Abschnitt hergestellt ist, eine höhere elastische Biegsamkeit bzw. Geschmeidigkeit besitzt, als der Kunststoff, aus dem der erste Abschnitt hergestellt ist.

10. Zahnleiste nach einem oder mehreren der Ansprüche 2 bis 8, wobei der zweite Abschnitt aus einem Kunststoff hergestellt ist, der höhere Zugfestigkeitseigenschaften besitzt als der Kunststoff des ersten Abschnittes.

11. Zahnleiste nach Anspruch 10, wobei der Kunststoff des zweiten Abschnittes mit Kohlefasern, mit Kevlar, mit Nylon oder mit einem Gewebe verstärkt ist, das vor allem entlang der Längsachse verläuft.

12. Zahnleiste nach einem oder mehreren der Ansprüche 2 bis 8 mit einem Gewebeeinsatz in dem zweiten Abschnitt.

## Revendications

1. Sangle à crémaillère pour dispositifs de fixation, en particulier pour des chaussures de sport, comprenant une surface dentée comportant une pluralité de dents disposées le long d'un axe longitudinal principal, la sangle étant **caractérisée en ce qu'**elle comprend une première partie (20) et une seconde partie (21) moulées l'une sur l'autre, la seconde partie étant partiellement intégrée dans la première partie et étant réalisée dans un matériau de couleur différente de la couleur dans laquelle est réalisée la première partie de manière à être au moins partiellement visible à travers la surface dentée.

2. Sangle à crémaillère selon la revendication 1, dans laquelle la première et la seconde parties sont moulées l'une sur l'autre par injection de matières plastiques respectives.

3. Sangle à crémaillère selon la revendication 1 ou la revendication 2, dans laquelle une zone de base est définie entre chaque paire de dents adjacentes de la surface dentée, la première partie comprenant, dans plusieurs desdites zones de base, au moins plusieurs ouvertures respectives à travers lesquelles s'étend la seconde partie.

4. Sangle à crémaillère selon la revendication 3, dans laquelle des parties de la seconde partie de la sangle font saillie au-delà du profil de la surface dentée à travers des ouvertures respectives.

5. Sangle à crémaillère selon la revendication 3 ou la revendication 4, dans laquelle les ouvertures ont des dimensions transversales qui augmentent vers une des extrémités longitudinales de la sangle.

6. Sangle à crémaillère selon une ou plusieurs des revendications précédentes, dans laquelle la seconde partie est en forme de U en plan avec une paire de bras respectifs qui sont allongés dans une direction sensiblement parallèle à l'axe longitudinal et reliés l'un à l'autre de manière transversale à une extrémité.

7. Sangle à crémaillère selon la revendication 6, dans laquelle les bras présentent une configuration symétrique de manière réfléchie par rapport à un plan médian de la sangle perpendiculaire à la surface dentée.

8. Sangle à crémaillère selon la revendication 6 ou la revendication 7, dans laquelle sont prévues une première pluralité et une seconde pluralité desdites ouvertures, chaque pluralité étant alignée sur un bras respectif de la seconde partie de telle sorte que les ouvertures constituent des moyens destinés à indiquer la position d'un mécanisme formant rochet d'arrêt d'un dispositif de fixation par rapport à la sangle à crémaillère.

9. Sangle à crémaillère selon une ou plusieurs des revendications 2 à 8, dans laquelle la matière plastique dans laquelle est réalisée la seconde partie a de meilleures caractéristiques de souplesse élastique que la matière plastique dans laquelle est réalisée la première partie.

10. Sangle à crémaillère selon une ou plusieurs des revendications 2 à 8, dans laquelle la seconde partie est réalisée dans une matière plastique ayant de meilleures caractéristiques de résistance à la traction que la matière plastique dans laquelle est réalisée la première partie.

11. Sangle à crémaillère selon la revendication 10, dans laquelle la matière plastique de la seconde partie est renforcée de fibres de carbone, de Kevlar, de nylon, ou de tissu, orienté(es) principalement le long de l'axe longitudinal.

12. Sangle à crémaillère selon une ou plusieurs des revendications 2 à 8, comprenant un empiècement en tissu dans la seconde partie.
